Europäisches Patentamt

European Patent Office

Office européen des brevets

(11) Publication number: **0 338 482 B1**

# EUROPEAN PATENT SPECIFICATION

(45) Date of publication of patent specification: **09.12.92**    (51) Int. Cl.⁵: **E02F 5/10**, E02F 5/14

(21) Application number: **89106858.7**

(22) Date of filing: **17.04.89**

(54) **Method and equipment for laying underground an elongated element.**

(30) Priority: **22.04.88 IT 2029288**

(43) Date of publication of application:
**25.10.89 Bulletin  89/43**

(45) Publication of the grant of the patent:
**09.12.92 Bulletin  92/50**

(84) Designated Contracting States:
**DE ES FR GB GR SE**

(56) References cited:
**EP-A- 0 278 705**
**FR-A- 2 311 241**
**FR-A- 2 422 994**
**US-A- 2 171 156**
**US-A- 4 692 063**

(73) Proprietor: **PIRELLI CAVI S.p.A.**
**Piazzale Cadorna, 5**
**I-20123 Milano(IT)**

(72) Inventor: **Magnani, Francesco**
**Via del Carmine 3/4**
**Pavia(IT)**
Inventor: **Minardi, Paolo**
**Via Bazzera, 9**
**Martellago (VE)(IT)**

(74) Representative: **Giannesi, Pier Giovanni et al**
**Pirelli S.p.A. Direzione Brevetti Piazzale**
**Cadorna, 5**
**I-20123 Milano(IT)**

## Description

The present invention relates to a method and an equipment for laying underground an elongate element.

It is known that when electric cables, telecommunication cables, flexible hoses or elongate elements in general, are laid on submarine soundings, they are housed into appropriate trenches to avoid possible damages. On account of the sea depth, sometimes relevant, and of the consequent difficulty for the operators to work at such a depth, the laying of the elongate element is carried out by means of laying machines, remote controlled by the tender ship, which, progressively advancing on the sounding, dig the trench and situate the elongate element therein.

More particularly, said machines lift the elongate element, cause it to pass along sliding ways of their own, and then lay it on the trench bottom. Owing to the high friction generated between the elongate element and the sliding means, the portion of elongate element situated downstream the laying machine is subjected to a tension greater than that applied to the portion situated upstream, so that a surplus of elongate element begins to accumulate upstream the laying machine.

On account of the considerable length of the elongate elements, the accumulated surplus can become prejudicial in a short time. In fact the elongate elements may bend at short bending radiuses, which may impair them, or even may be trapped under the laying machine with high risk of damage for themselves and/or for the latter.

To eliminate this disadvantage, some laying machines are provided in their front part with a mechanical moving arm, terminating with a guide into which passes the elongate element. When a surplus of the elongate element accumulates upstream the laying machine, the mechanical arm is raised, lifting the elongate element and putting off situations of risk for the latter and/or for the laying machine.

Said machines, however, solve the problem only temporarily, since they are unable to transfer the accumulated surplus from upstream to downstream and therefore to avoid accumulation during progressive advancement of the machine.

Other machines are known for digging a trench in the ground and for contemporaneously laying into said trench an elongate element.

Examples of these machines are those described in the patents WO-A-8600356 and US-A-4692063.

With the machines described in both the above mentioned patents the elongate element is not previously layed on the ground or on the submarine soundings, but is collected on a bobbin connected to or supported by the machines themselves by which the trench is digged.

These machines, while they advances along a pre-established laying line, dig a trench and contemporaneously lay in this latter the elongate element drawn from the bobbin.

Since no elongate element is present on the ground upstream the machine no risk that this latter might damage said elongate element exists but another drawback arises.

This drawback is a consequence of the small amount of elongate element that can be contained in the bobbin connectet to or brought by the machine.

In fact, in case the elongate element to be layed has a lenght greater than the lenght that can be stored in one bobbin, joints between the elongate elements of different bobbins must be executed during the laying with all the inconveniences involved with the execution of joints in a laying yard.

In particular, when the elongate element is an electric cable and when such a cable has to be layed on a submarine soundings, the use of the machines according to the patents WO-A-8600356 and US-A-4692063 is impossible since it is impossible to make joints of electric cables in water.

The present invention aims to overcome the above indicated drawbacks and to provide a method and an equipment for laying underground an elongate element which are able to prevent the accumulation of surplus upstream the laying equipment.

To achieve this aims, the object of the present invention is a method for the underground laying of an elongate element (3) comprising the steps of:

- positioning an elongate element (3) on the ground or on the submarine soundings (2) along a pre-established laying line,
- coupling a trench digging equipment (1) with said laid down elongate element (3),
- causing the equipment (1) to advance along said pre-established laying line by digging at the equipment downstream side a trench (7) and laying down in the obtained trench (7) said elongate element (3),
  said method being characterized by providing the steps of:
- detecting the position of the portion of elongate element (3) between the trench digging equipment (1) and the ground upstream said equipment (1) and
- causing the position of the portion of elongate element (3) between the trench digging equipment (1) and the ground upstream the equipment (1) to be maintained within a predetermined position range.

A further object of the present invention is an equipment (1) for underground housing into a trench (7) an elongate element (3), previously disposed on the ground or on the submarine soundings (2), along a pre-established laying line, said equipment (1) comprising:

- advancing means (5) for moving said equipment (1), inside which the elongate element (3) slides, along the pre-established laying line,
- digging means (6), brought by the equipment (1), which digs a trench (7) downstream this latter,
- tensioning means (8, 14a, 15a, 14b, 15b) acting on the elongate element (3),
    said equipment (1) being characterized in that it provides:
- a position sensing means (13, $T_1$, $T_2$) of the portion of the elongate element (3) between the equipment (1) and the ground upstream the equipment (1),
- a control circuit operating under control of the position sensing means (13, $T_1$, $T_2$) which acts on the tensioning means (8, 14a, 14b, 15a, 15b) by applying an active tension force to the elongate element (3) in the direction opposite to the direction of advancement of the equipment (1) and/or on the advancing means (5) for causing the portion of elongate element between the equipment (1) and the ground upstream the equipment (1) to be maintained within a pre-established position range.

Further aims and advantages of the present invention will be more clearly apparent from the following detailed description and from the appended drawings, given only by way of non limiting examples, in which:

Figure 1 - represents a laying equipment in accordance with the present invention, and

Figure 2 - represents a particular of figure 1 in enlarged view.

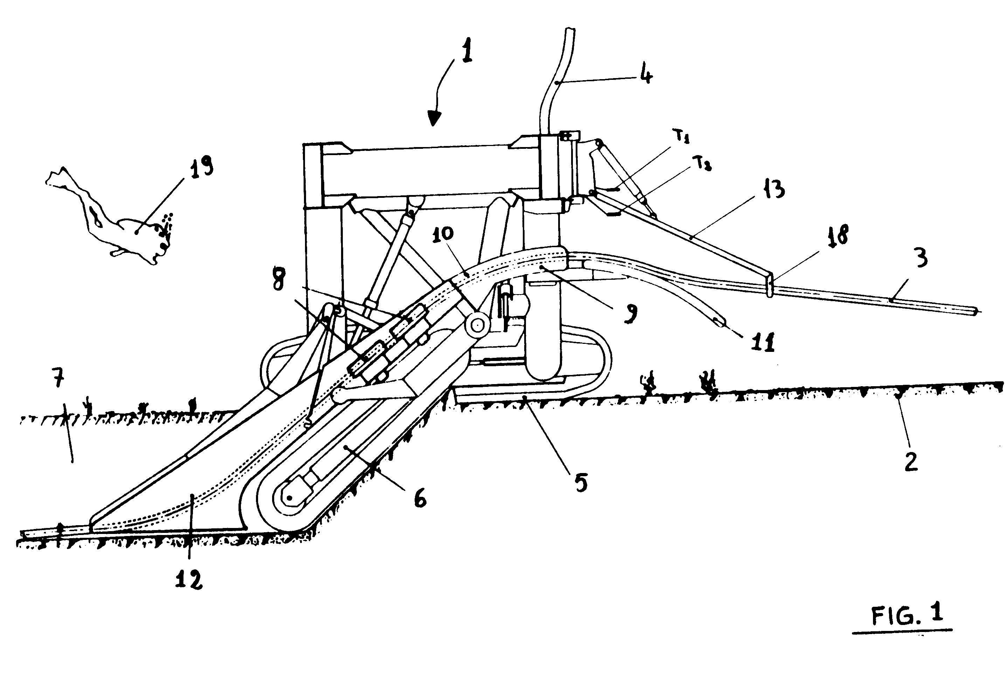

With reference to Figure 1, a laying equipment 1 advances on a submarine soundings to lay underground an elongate element 3, previously leant on said soundings 2.

The laying equipment 1 comprises an electric motor fed by a cable 4 coming from the tender ship and hydraulic devices actuated by the electric motor.

Said hydraulic devices actuate - inter alia - locomotion means, as tracks 5 , for the advancement of the equipment, a power-shovel 6 for digging a trench 7 and a tensioning member 8 for the elongate element 3 . In an alternative embodiment, the advancement of the laying equipment can be carried out by tow from the tender ship.

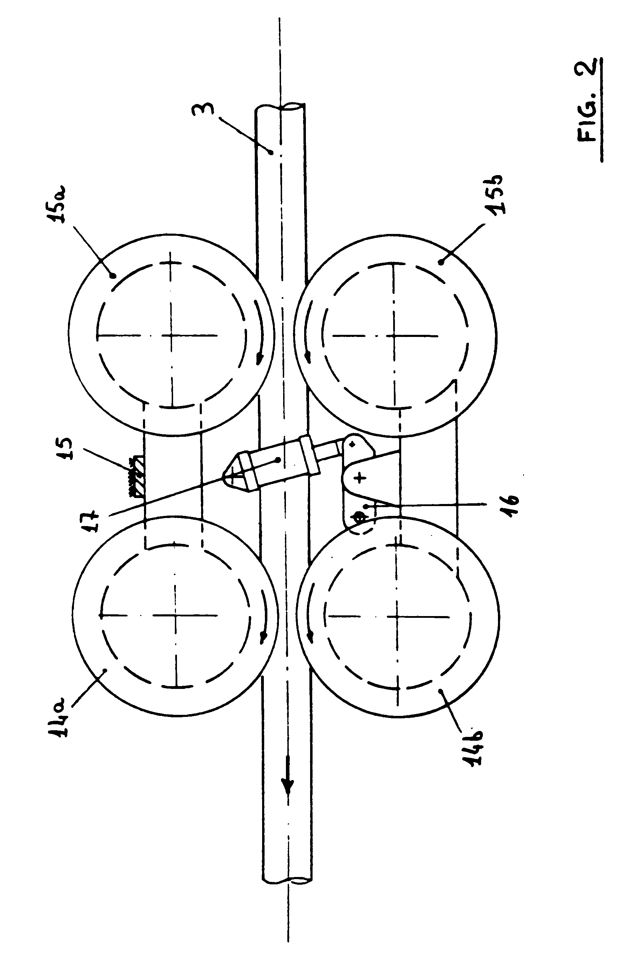

The tensioning member 8 , which will be better illustrated in FIG.2, is arranged in the central part 9 of sliding ways 10 which also comprise a front part 11 and a rear part 12 . At last, the front part of the equipment carries a moving arm 13 having at its end a ring 18 into which is inserted the elongate element 3 , and which acts as a position sensor for the latter.

FIG.2 represents the tensioning member 8 of FIG. 1, which comprises two pairs of motor-driven facing rollers 14a , 14b and 15a , 15b . The driving can be individual for each roller or common to a pair of rollers. Rollers 14a and 15a are assembled on a fixed support 15 , whilst rollers 14b and 15b are mounted on a balance-type movable device 16 actuated by a jack 17 .

The cylindrical surfaces of all the four rollers 14a , 14b , 15a , 15b are concave and are provided with notches; they are made of highly adherent materials, such as rubber or resins having a high friction coefficient in order to ensure a good grip of the elongate element 3 without impairing it.

In an alternative embodiment, not illustrated, the rollers can be replaced by tracks, still having concave facing surfaces and made of highly adherent material. In a second alternative embodiment, not illustrated,the gripping force exerted by the rollers or the tracks on the elongate element can be supplied by springs or counterweights rather than by the jack.

As regards operation, at first a shallow-water diver 19 inserts the elongate element 3 in the laying equipment 1 and in particular in ring 18 of the moving arm 13 , into the sliding ways 9 , 10 , 11 , 12 and between the pairs of rollers 14a , 14b and 15a , 15b of the tensioning member 8 , and actuates jack 17 so that the pairs of rollers exert a gripping action on the elongate element 3 .

Now, as the laying equipment advances, the front part 11 of guide 10 lifts the elongate element 3 upstream equipment 1 , the tensioning member 8 applies a tension force to said elongate element 3 , the power-shovel 6 digs a trench 7 and the rear part 12 of the sliding way 10 positions the elongate element 3 within said trench 7 .

The tensioning member 8 applies to the elongate element 3 an active tension in the direction opposite to the direction of advancement of equipment 1 ; in this way the portion of said elongate element upstream the equipment is subjected to a tension equal to, or higher than, that of the downstream portion,so that any surplus of elongate element cannot accumulate upstream the equipment.

The laying equipment 1 is also provided with a conventional, locked-loop type control circuit, not represented, which keeps the portion of elongate element situated upstream the equipment under a constant tension at about a pre-established value or within a pre-established range of values. The control circuit comprises position transducers T1 and T2 , for instance of magnetic type and respectively arranged above and below the movable arm 13 , which drive the motors of the tensioning member 8 .

In operation, the movable arm 13 detects the position and therefore the tension to which is subjected the portion of elongate element 3 which is upstream the laying equipment 1 , and the position transducers T1 and T2 convert this position into an electric signal, which in turn determines the entity of the torque applied by the motors of the tensioning member 8 to the elongate element 3 through the dragging rollers or tracks.

Once the optimum tension to be applied to the portion of elongate element 3 situated upstream equipment 1 , and consequently the position of said portion, have been pre-established, the motors of the tensioning member 8 are actuated to generate a mean torque able to maintain such position.

If the position of the portion of elongate element upstream equipment 1 lowers, this means that the tension applied to said portion is smaller than the optimum tension, and therefore the motors of the tensioning member 8 increase the torque applied to said elongate element 3 and bring again the tension to its pre-established value.

Vice versa, if the position of the portion of elongate element upstream equipment 1 rises, this means that the tension applied to said portion is greater than the optimum tension, so that the motors of the tensioning member 8 reduce the torque applied on said elongate element 3 , bringing again the tension to its pre-established value.

In this way the tension applied by the tensioning member 8 to the elongate element 3 is continuously adjusted, according to the position of the portion of elongate element 3 situated upstream the laying equipment 1 , so that said regulation can be defined as "analogic". In an alternative embodiment, said regulation can be of "digital" type.

In this case the position transducers T1 and T2 are switches which limit the minimum and maximum position admitted for the portion of elongate element 3 situated upstream equipment 1 ; moreover, it is not possible to vary the entity of the torque applied by the tensioning member 8 to said elongate element 3 .

The upper switch T1 controls the motors of the tensioning member 8 , whilst the lower switch T2 controls the means for advancing the laying equipment When the movable arm 13 closes the lower switch T2 , this means that the portion of elongate element 3 upstream equipment 1 is loose and begins to accumulate in excess; the closure of said switch stops the forward motion of equipment 1 , while the tensioning member 8 transfers the accumulated length from upstream to downstream said equipment.

When all the surplus has been transferred downstream, the portion of elongate element upstream the equipment is stretched within the pre-established limits, the movable arm 13 rises, the lower switch T2 re-opens and equipment 1 begins again to advance.

When the movable arm 13 closes the upper switch T1 this means that the portion of elongate element 3 upstream equipment 1 is too stretched and the closure of said switch stops the motors of the tensioning member 8 , leaving the rollers or the tracks gripping the elongate element. Therefore, the tensioning member 8 does not stretch the elongate element 3 any longer, while the laying equipment 1 goes on advancing.

When the tension of the portion of elongate element 3 situated upstream the laying equipment 1 has dropped to its pre-established limits, said element lowers down together with the moving arm 13 which, re-opening the upper switch T1 , restarts the motors of the tensioning member 8 , which reapplies an active tension to the elongate element 3 . In both of the described solutions the entity of the torques or the distance between the position transducers or the switches which may be suitable to prevent the accumulation of surplus, are selected as a function of the characteristics of the elongate elements to be laid underground.

From the above description it is evident that the invention achieves the goal of avoiding that - during the laying underground of the elongate element - the latter may accumulate upstream the laying equipment. In fact the tensioning member 8 applies to said elongate element an active tension able to overcome the resistance to the advancement due to the friction generated during the passage of the elongate element inside the sliding ways of the laying equipment.

Further, the control circuit of the locked-loop type ensures that the portion of elongate element upstream the laying equipment is always subjected to an optimum tension preventing any damage both to the elongate element itself and to the laying equipment.

At last, the balance-type movable device allows a certain independent movement of the rollers or tracks, so that, if there are enlargements on the elongate element, they can pass beyond the tensioning member without any risk of being subjected to squeezing.

The method and the equipment forming the object of the present invention have been described with reference to the laying underground of elongate elements on submarine soundings where the operator intervention is very difficult, but it is evident that they can be used also for laying underground said elements on the earth surface, allowing a greater mechanization of the laying operation.

## Claims

1. A method for the underground laying of an elongate element (3) comprising the steps of:
   - positioning an elongate element (3) on the ground or on the submarine soundings (2) along a pre-established laying line,
   - coupling a trench digging equipment (1) with said laid down elongate element (3),
   - causing the equipment (1) to advance along said pre-established laying line by digging at the equipment downstream side a trench (7) and laying down in the obtained trench (7) said elongate element (3),
   said method being characterized by providing the steps of:
   - detecting the position of the portion of elongate element (3) between the trench digging equipment (1) and the ground upstream said equipment (1) and
   - causing the position of the portion of elongate element (3) between the trench digging equipment (1) and the ground upstream the equipment (1) to be maintained within a predetermined position range.

2. An equipment (1) for underground housing into a trench (7) an elongate element (3), previously disposed on the ground or on the submarine soundings (2), along a pre-established laying line, said equipment (1) comprising:
   - advancing means (5) for moving said equipment (1) inside which the elongate element (3) slides, along the pre-established laying line,
   - digging means (6), brought by the equipment (1), which digs a trench (7) downstream this latter,
   - tensioning means (8, 14a, 15a, 14b, 15b) acting on the elongate element (3),
   said equipment (1) being characterized in that it provides:
   - a position sensing means (13, $T_1$, $T_2$) of the portion of the elongate element (3) between the equipment (1) and the ground upstream the equipment (1),
   - a control circuit operating under control of the position sensing means (13, $T_1$, $T_2$) which acts on the tensioning means (8, 14a, 14b, 15a, 15b) by applying an active tension force to the elongate element (3) in the direction opposite to the direction of advancement of the equipment (1) and/or on the advancing means (5) for causing the portion of elongate element between the equipment (1) and the ground upstream the equipment (1) to be maintained within a pre-established position range.

3. An equipment according to claim 2 characterized in that the position sensing means comprise a moving arm (13) provided at its free end with a ring (18) into which passes the elongate element (3) and a pair of position transducers ($T_1$, $T_2$) arranged above and below the moving arm (13).

## Patentansprüche

1. Verfahren zum unterirdischen Verlegen eines länglichen Elementes (3), umfassend die Schritte des:
   - Anordnens eines länglichen Elementes (3) auf dem Erdboden (2) oder auf dem Boden (2) eines Gewässers entlang einer vorbestimmten Verlegungslinie,
   Koppelns einer Grabenziehausrüstung (1) mit dem niedergelegten länglichen Element (3),
   - Veranlassens der Ausrüstung (1), sich entlang der vorbestimmten Verlegungslinie vorwärts zu bewegen, indem an der stromabwärtigen Seite der Ausrüstung ein Graben (7) gezogen wird und das längliche Element (3) in dem erhaltenen Graben (7) abgelegt wird,
   wobei das Verfahren gekennzeichnet ist durch die Schritte des:
   - Feststellens der Position des Teiles des länglichen Elementes (3) zwischen der Grabenziehausrüstung (1) und dem Erdboden stromaufwärts der Ausrüstung (1), und des
   - Veranlassens, daß die Position des Teiles des länglichen Elementes (3) zwischen der Grabenziehausrüstung (1) und dem Erdboden stromaufwärts der Ausrüstung (1) innerhalb eines vorbestimmten Positionsbereiches gehalten wird.

2. Ausrüstung (1) zum unterirdischen Aufnehmen eines länglichen Elementes (3) in einem Graben (7), wobei das Element zuvor auf dem Erdboden (2) oder auf dem Boden (2) eines Gewässers entlang einer vorbestimmten Verlegungslinie angeordnet worden ist, und wobei die Ausrüstung (1) aufweist:
   - eine Vorbewegungseinrichtung (5), um die Ausrüstung (1) zu bewegen, innerhalb von welcher das längliche Element (3) entlang der vorbestimmten Verlegungslinie gleitet,

- eine Grabeeinrichtung (6), die von der Ausrsütung (1) dargeboten ist und die stromabwärts der Ausrüstung einen Graben (7) zieht, und
- eine Zugeinrichtung (8,14a,15a,14b,15b), die auf das langgestreckte Element (3) wirkt,

dadurch gekennzeichnet, daß die Ausrüstung (1) folgendes schafft:

- eine Positionsfühleinrichtung (13,$T_1$, $T_2$), welche die Position des Teiles des länglichen Elementes (3) zwischen der Ausrüstung (1) und dem Boden stromaufwärts der Ausrüstung (1) feststellt, und
- einen Steuerkreis, der unter der Steuerung der Positionsfühleinrichtung (13,$T_1$,$T_2$) arbeitet und auf die Zugeinrichtung (,14a,14b,15a,15b) einwirkt durch Anlegen einer aktiven Zugkraft an das längliche Element (3) in einer Richtung entgegengesetzt zu der Richtung der Vorbewegung der Ausrüstung (1), und/oder auf die Vorbewegungseinrichtung (5) einwirkt, um den Teil des länglichen Elementes zwischen der Ausrüstung (1) und dem Boden stromaufwärts der Ausrüstung (1) zu veranlassen, innerhalb eines vorbestimmten Positionsbereiches gehalten zu werden.

3. Ausrüstung nach Anspruch 2, dadurch gekennzeichnet, daß die Positionsfühleinrichtung einen beweglichen Arm (13), der an seinem freien Ende mit einem Ring (18) versehen ist, in den das längliche Element (3) paßt, und ein Paar von Positionswandlern ($T_1$,$T_2$) aufweist, die oberhalb und unterhalb des beweglichen Armes (13) angeordnet sind.

**Revendications**

1. Un procédé de pose souterraine d'un élément allongé (3) comprenant les étapes consistant à:
   - positionner un élément allongé (3) sur le sol ou sur les fonds sous-marins (2) le long d'une ligne de pose préétablie,
   - accoupler audit élément allongé posé à plat (3) un équipement (1) de creusement de tranchée,
   - amener l'équipement (1) à avancer le long de ladite ligne de pose préétablie en creusant sur le côté aval de l'équipement une tranchée (7) et en posant ledit élément allongé (3) dans la tranchée obtenue (7),

ledit procédé étant caractérisé en ce qu'il inclut les étapes consistant à:

- détecter la position de la partie de l'élément allongé (3) entre l'équipement (1) de creusement de tranchée et le sol en amont dudit équipement (1) et
- amener la position de la partie de l'élément allongé (3) située entre l'équipement (1) de creusement de tranchée et le sol en amont de l'équipement (1) à être maintenue à l'intérieur d'une plage prédéterminée de positions.

2. Un équipement (1) de pose souterraine, dans une tranchée (7), d'un élément allongé (3) précédemment disposé sur le sol ou sur les fonds sous-marins (2) le long d'une ligne de pose préétablie, ledit équipement (1) comprenant:
   - des moyens (5) d'avance pour déplacer le long de la ligne de pose préétablie ledit équipement (1) à l'intérieur duquel coulisse l'élément allongé (3),
   - un moyen de creusement (6), porté par l'équipement (1), qui creuse une tranchée (7) en aval de ce dernier,
   - des moyens tendeurs (8, 14a, 15a, 14b, 15b) agissant sur l'élément allongé (3),
     ledit équipement (1) étant caractérisé en ce qu'il inclut:
   - un moyen de détection (13, $T_1$, $T_2$) de position de la partie de l'élément allongé (3) située entre l'équipement (1) et le sol en amont de l'équipement (1),
   - un circuit de commande fonctionnant sous-commande des moyens de détection (13, $T_1$, $T_2$) de position qui agit sur le moyen tendeur (8, 14a, 14b, 15a, 15b), en appliquant à l'élément allongé (3) une force de tension active dans le sens opposé au sens d'avance de l'équipement (1), et/ou sur les moyens d'avance pour amener la partie de l'élément allongé située entre l'équipement (1) et le sol en amont de l'équipement (1) à être maintenue à l'intérieur d'une plage préétablie de positions.

3. Un équipement selon la revendication 2 caractérisé en ce que les moyens de détection de position comprennent un bras mobile (13) pourvu à son extrémité libre d'une bague (18) dans laquelle passe l'élément allongé (3), et une paire de transducteurs ($T_1$, $T_2$) de position disposés au-dessus et au-dessous du bras mobile (13).

FIG. 1

FIG. 2

EP 0 338 482 B1